# FASCICULE DE BREVET EUROPEEN

(11) **EP 1 663 826 B1**
(45) Date de publication et mention de la délivrance du brevet: **19.11.2008**
(21) Numéro de dépôt: 04787336.9
(22) Date de dépôt: 09.09.2004
(51) Int. Cl.: B65G 65/00

(54) **DISPOSITIF DE MANUTENTION DE CAISSES ET ANALOGUES**
HANDHABUNGSVORRICHTUNG FÜR KÄSTEN UND DERGLEICHEN
HANDLING DEVICE FOR BOXES AND THE SIMILAR

(30) Priorité: 10.09.2003 FR 0310651
(43) Date de publication de la demande: 07.06.2006
(73) Titulaire: Labadis, 53000 Laval (FR)
(72) Inventeur: LABADIE, Jean, F-53000 Laval (FR)
(74) Mandataire: Lepelletier-Beaufond, François
(86) Numéro de dépôt international: PCT/FR2004/002287
(87) Numéro de publication internationale: WO 2005/026023

(56) Documents cités:
- FR-A- 2 132 575
- FR-A- 2 534 154
- FR-A- 2 596 739
- US-A- 5 190 434
- US-A- 5 498 122
- US-A- 5 882 174
- US-A- 6 152 678
- PATENT ABSTRACTS OF JAPAN vol. 009, no. 191 (M-402), 7 août 1985 (1985-08-07) & JP 60 056730 A (MOTODA DENSHI KOGYO KK), 2 avril 1985 (1985-04-02)
- PATENT ABSTRACTS OF JAPAN vol. 009, no. 226 (M-412), 12 septembre 1985 (1985-09-12) & JP 60 082529 A (MOTODA DENSHI KOGYO KK), 10 mai 1985 (1985-05-10)

## Description

L'invention a trait au domaine de la manutention de contenants tels que des caisses ou des bacs.

Elle concerne plus particulièrement un dispositif de manutention destiné à disposer de telles caisses à une hauteur convenable pour qu'un opérateur puisse y prendre les pièces dont il a besoin, et destiné également à permettre l'évacuation et le remplacement des caisses, une fois vidées, par des caisses remplies.

Les dispositifs de ce type sont notamment employés aux différents postes d'une ligne de montage. En effet, dans le cas où un opérateur ou une machine doit réaliser une opération de montage rapidement et efficacement, il est nécessaire de disposer des pièces à monter de telle manière qu'elles soient facilement accessibles et situées à proximité du poste de travail.

De plus, il est nécessaire de prévoir le stockage de ces pièces au niveau du poste de travail ainsi que la manutention des moyens destinés à les contenir, notamment l'évacuation de ces moyens.

On connaît déjà par le brevet américain 5,498,122 un appareil de manutention de palettes pour les placer une à une dans une position d'alimentation afin que les pièces contenues dans la palette placée dans la position d'alimentation puissent être prises par le bras d'un robot. Cet appareil de manutention comporte : une première table destinée à recevoir une pile de palettes contenant des pièces, la première table étant mobile vers le haut et vers le bas à l'aplomb de la position d'alimentation ; une deuxième table destinée à recevoir une pile de palettes vides, la deuxième table étant mobile vers le haut et vers le bas à l'aplomb d'une position de déchargement d'une palette vide ; des moyens d'entraînement des première et deuxième tables comportant un moteur et une chaîne sans fin pour les entraîner dans un premier sens (montée de la première table et descente de la deuxième table) ou dans un deuxième sens (descente de la première table et montée de la deuxième table) ; des moyens d'engagement comportant une paire de longerons à section en L prévus pour s'engager avec des rebords saillant des palettes, les longerons définissant la position d'alimentation et un trajet continu de cette position jusqu'à la position de déchargement d'une palette vide sur la deuxième table, le passage d'une palette vide de la position d'alimentation à la position de déchargement se faisant par poussée du bras de robot sur cette palette, les moyens d'engagement comportant également des cylindres pneumatiques pour entrainer les longerons afin de les engager (premier sens) ou désengager (deuxième sens) des rebords d'une palette ; et une cage au sommet de laquelle sont disposés les longerons, la cage comportant quatre premier montants pour guider à coulissement la première table et quatre deuxième montants pour guider à coulissement la deuxième table, avec deux premier montants et deux deuxième montants prévus sur l'un des cotés longitudinaux sous l'un des longerons et de même sur le coté longitudinal opposé, un premier côté latéral étant fermé par un montant central, le deuxième coté latéral étant ouvert et servant à l'entrée et à la sortie des piles de palettes, respectivement dans un sens d'entrée et dans un sens de sortie de même orientation que le sens de transfert d'une palette entre la position d'alimentation et la position de déchargement. Le cycle de fonctionnement de cet appareil est le suivant, à partir d'un état où une pile de palettes pleines vient d'être mise en place sur la première table en position abaissée : (a) déplacement des longerons par les cylindres dans le deuxième sens ; (b) déplacement de la première table vers le haut pour que le rebord saillant de la palette supérieure de la pile portée par la première table soit disposé au-dessus des longerons ; (c) déplacement des longerons par les cylindres dans le deuxième sens pour qu'ils s'engagent avec les rebords de cette palette ; (d) déplacement de la première table vers le bas pour libérer cette palette de la pile de palettes portée par la première table ; (e) maintien de cette palette par les longerons et prise des pièces qu'elle contient par la main du robot ; (f) transfert, par la main de robot, lorsque la palette située à la position d'alimentation est vide, de cette palette vers la position de déchargement ; (g) déplacement des longerons dans le deuxième sens afin de les désengager du rebord de la palette vide pour placer la palette vide sur la deuxième table ; et ainsi de suite, l'opération (g) correspondant à l'opération (a) pour la palette suivante de la pile portée par la première table, jusqu'à ce que toutes les palettes de la pile initialement portée par la première table se retrouvent sur la deuxième table, à l'exception de la dernière palette qui demeure dans la position d'alimentation. Ensuite, les palettes vides empilées sur la deuxième table sont enlevées dans le sens de sortie puis la deuxième table est élevée tandis que la première table est abaissée puis une pile de palette pleines est entraînée dans le sens d'entrée jusqu'à être disposée sur la première table. Le déchargement de la pile de palettes vides (sens de sortie) et l'introduction de la pile de palettes pleines (sens d'entrée) sont effectués alors que la dernière des palettes introduite précédemment est toujours dans la position d'alimentation et que le bras de robot vient y prendre des pièces.

On connaît par ailleurs des moyens de manutention comportant une colonne centrale, deux supports montés de part et d'autre de la colonne et mobiles en translation verticale, le long de la colonne. L'un des supports est monté sur une vis motorisée solidaire de la colonne tandis que l'autre support est monté sur une simple glissière et est relié à l'autre support par un câble coopérant avec une poulie située sur la partie supérieure de la colonne.

Un tel dispositif de manutention, conforme au préambule de la revendication 1, permet de charger sur le premier support une pile de caisses pleines de pièces et de mettre la première caisse à une hauteur prédéterminée, accessible à l'opérateur.

Une fois la première caisse vidée de ses pièces, celle-ci est transférée manuellement sur le deuxième support, par dessus la colonne, et la deuxième caisse de la pile de caisses pleines devient accessible.

De tels dispositifs de manutention assurent de manière satisfaisante les fonctions de mise à disposition des caisses pleines.

Le but de l'invention est néanmoins d'améliorer ce type de dispositif de manutention en fournissant un dispositif facilitant le transfert des bacs d'un support à l'autre.

A cet effet, l'invention propose un dispositif de manutention de caisses et analogues, destiné à présenter itérativement la caisse supérieure d'une première pile de caisses à une hauteur prédéterminée et à permettre l'évacuation de ladite caisse supérieure, de sorte que les caisses évacuées de la première pile forment au fur et à mesure une deuxième pile, ce dispositif comportant :
- un premier support mobile verticalement, destiné à recevoir ladite première pile ;
- un deuxième support mobile verticalement, destiné à recevoir ladite deuxième pile ;
- des moyens pour commander de manière synchronisée le premier support et le deuxième support avec l'un d'eux qui monte lorsque l'autre descend, et inversement ;
lequel dispositif de manutention est **caractérisé en ce qu**'il comporte en outre un premier montant latéral situé sur un premier côté latéral du dispositif et un deuxième montant latéral distinct du premier montant et situé sur un deuxième côté latéral du dispositif, opposé au premier côté latéral, chaque dit premier montant et deuxième montant étant muni d'une glissière, le premier support étant monté sur la glissière du premier montant et le deuxième support étant monté sur la glissière du deuxième montant, le dispositif étant agencé pour laisser libre l'espace existant entre le deuxième montant et ladite caisse supérieure de la première pile, au niveau de la hauteur prédéterminée de sorte que la caisse supérieure de la première pile soit transférable directement vers la deuxième pile par translation latérale, c'est-à-dire orientée du premier côté latéral vers le deuxième côté latéral, et à niveau constant ou à peu près.

Un tel dispositif de manutention permet d'aligner les piles de caisses de telle sorte que la première caisse d'une pile peut être transférée sur l'autre pile d'un simple geste de l'opérateur ou bien par un actionneur.

Un tel dispositif de manutention est donc adapté à augmenter la productivité d'un poste de travail par la mise à disposition en permanence d'une caisse de pièces et, par l'évacuation facile et rapide des caisses vides, avec peu de temps mort.

Les supports peuvent être en outre adaptés à occuper une position de mi-hauteur dans laquelle ils sont disposés en vis-à-vis, au même niveau ou à peu près.

Lorsque lesdites piles de caisses sont établies sur des chariots roulant, ce qui est courant dans ce type d'application, le dispositif selon l'invention permet également un transfert aisé du chariot roulant d'un support vers un autre, notamment lorsque ceux-ci sont dans leur position de mi-hauteur.

Dans un mode de réalisation, les moyens pour commander de manière synchronisée comportent un câble dont chacune des extrémités est reliée à l'un respectif des supports et qui passe par un chemin de guidage comportant deux poulies de renvoi inférieures disposées chacune à la base d'un respectif des montants latéraux et deux poulies de renvoi supérieures disposées chacune à l'extrémité supérieure d'un respectif des montants latéraux, la portion du chemin de guidage située entre les poulies de renvoi inférieures étant sensiblement horizontale et disposée sous lesdits supports de sorte que l'ensemble formé par les deux supports soit partiellement entouré par le chemin de guidage.

Cette forme de réalisation mécanique desdits moyens pour commander de manière synchronisée rend le dispositif particulièrement fiable.

En outre, le dispositif de manutention peut comporter au moins un moteur coopérant avec des moyens de transmission reliés aux moyens pour commander de manière synchronisée, de manière à motoriser les déplacements du premier et du deuxième support.

Selon une caractéristique préférée, lesdits moyens de transmission relient le moteur à l'un des supports, de sorte que les déplacements dudit support soient commandés directement par le moteur, les déplacements de l'autre support étant commandés par l'intermédiaire des moyens pour commander de manière synchronisée.

Il s'agit d'une forme de réalisation particulièrement économique dans laquelle un seul moteur est employé grâce aux moyens pour commander de manière synchronisée.

Dans ce cadre, lesdits moyens de transmission peuvent comporter une vis de transmission adaptée à être entraînée en rotation par le moteur, le support étant relié à un organe fileté en prise avec la vis de transmission.

Selon une caractéristique préférée, au moins une des poulies de renvoi est montée sur un axe mobile permettant un déplacement de la poulie et une modification de la longueur du chemin de guidage.

Plus précisément, l'une des poulies de renvoi supérieures peut être montée mobile sensiblement verticalement par rapport au montant latéral correspondant.

Avantageusement, l'une des poulies de renvoi supérieures peut être reliée à un organe fileté en prise avec une vis de réglage montée tournante sur le montant latéral correspondant, la vis de réglage étant reliée à des moyens d'entraînement accessibles depuis ledit montant latéral.

Un réglage de la hauteur du chemin de câble est ainsi permis de manière à pouvoir positionner la première caisse de la première pile à la hauteur de transfert sur l'autre pile désirée.

De plus, les caisses de différentes hauteurs peuvent ainsi être utilisées avec le même dispositif de manutention.

Avantageusement, le dispositif de manutention comporte en outre un module de commande des moyens pour commander de manière synchronisée ainsi qu'au moins un organe de détection relié audit module de commande, ce dernier étant adapté à commander les moyens pour commander de manière synchronisée en fonction des indications fournies par l'organe de détection.

L'organe de détection peut être un organe de détection de la hauteur de la première pile, un organe de détection de la hauteur de la deuxième pile, et/ou un organe de détection de support adapté à fournir une indication au module de commande lorsque les deux supports sont en vis-à-vis.

Le dispositif de manutention est ainsi, en partie, automatisé. L'une des piles est soulevée et l'autre abaissée, automatiquement, au fur et à mesure que les caisses sont vidées et transférées d'une pile à l'autre.

Selon une caractéristique préférée, le dispositif comporte un organe d'arrêt de sécurité monté sous l'un au moins desdits supports, cet organe comportant des moyens d'arrêt des supports.

Un tel dispositif d'arrêt permet un fonctionnement sûr du dispositif sans avoir recours à des capots ou barrières qui gênent les opérations.

Selon un autre mode de réalisation de l'invention, les moyens pour commander de manière synchronisée comportent deux moteurs disposés chacun sur l'un des montants latéraux pour permettre un mouvement indépendant de chaque support.

Chaque montant latéral ayant ainsi son moteur de commande, il n'est plus nécessaire de prévoir de dispositif de transmission d'un montant latéral à l'autre. L'épaisseur des montants latéraux peut donc être réduite.

Selon une caractéristique préférée de ce mode de réalisation, les supports sont en outre adaptés à occuper une position haute dans laquelle ils sont disposés en vis-à-vis, au même niveau ou à peu près.

Lorsque les piles de caisses sont établies sur des chariots roulants, le dispositif permet alors un transfert aisé du chariot roulant d'un support vers un autre par une personne debout et dans une position ergonomique.

Chaque support peut être rattaché à la première extrémité d'un lien souple dont la deuxième extrémité est rattachée au moteur de sorte que l'enroulement de la deuxième extrémité du lien souple par le moteur provoque la montée du support.

Un gain en termes de sécurité est ainsi obtenu dans la mesure où, lors de la descente d'un support, le lien souple permet au support de ne pas exercer une force autre que son propre poids contre un obstacle éventuel, notamment une partie du corps de l'opérateur.

Selon une caractéristique préférée, le moteur comporte un enrouleur adapté à permettre l'enroulement sur elle-même de la deuxième extrémité du lien souple par le moteur de sorte qu'au cours de l'enroulement le diamètre d'enroulement augmente.

Un tel enrouleur permet un travail du moteur à couple constant dans la mesure où, étant donné le fonctionnement de ce dispositif, un support monte au fur et à mesure de l'enlèvement des caisses de la pile qu'il porte. En d'autres termes, plus un support est bas, plus le moteur doit soulever une charge importante et plus un support est haut, plus la charge à soulever est faible.

L'enrouleur permet alors d'avoir un faible diamètre d'enroulement lorsqu'un support est bas, le couple fourni par le moteur permettant de soulever des charges importantes. A l'inverse, lorsqu'un support est haut, le diamètre d'enroulement est supérieur et le moteur, travaillant au même couple, est alors adapté à soulever des charges moins importantes. L'utilisation d'un variateur associé au moteur n'est par conséquent pas nécessaire.

Avantageusement, le lien souple comporte une sangle formant la deuxième extrémité du lien souple.

Le dispositif de manutention peut en outre comporter un module de commande des moyens pour commander de manière synchronisée, ainsi qu'au moins un organe de détection relié audit module de commande, ce dernier étant adapté à commander les moyens pour commander de manière synchronisée en fonction des indications fournies par l'organe de détection.

Cette disposition permet l'automatisation du dispositif de manutention.

Deux organes de détection peuvent ainsi être disposés chacun sur l'un des montants latéraux et adaptés chacun à la détection de la hauteur de la pile correspondante.

Ces organes de détection permettent un alignement précis des piles portées par les supports afin de faciliter la translation latérale de la première pile vers la deuxième pile.

D'autres caractéristiques et avantages de l'invention apparaîtront à la lumière de la description qui va suivre d'un mode de réalisation préféré donné à titre d'exemple non limitatif, description faite en référence aux dessins annexés dans lesquels :
- la figure 1 est une vue de face, en coupe, d'un dispositif de manutention selon un premier mode de réalisation de l'invention, dans une configuration de départ cycle : la première caisse de la première pile (en haut à droite) a été vidée et est transférée vers la deuxième pile ;
- la figure 2 illustre l'étape suivant la figure 1 : la première pile remonte tandis que la deuxième pile descend pour remettre à niveau les caisses ;
- les figures 3 à 13 montrent, sur le modèle des figures 1 et 2, les étapes successives du fonctionnement du dispositif de manutention de la figure 1, la figure 13 représentant une configuration de fin de cycle ;
- la figure 14 est un schéma représentant un moteur, un module de commande du moteur ainsi que des capteurs faisant partie du dispositif de manutention conforme à invention ;
- la figure 15 est une vue agrandie d'une portion de ce dispositif situé au niveau de l'encart XV de la figure 12 ;
- les figures 16 et 17 montrent le réglage possible de la longueur du chemin de câble du dispositif des figures 1 à 13 ;
- la figure 18 est une vue de face, en coupe, d'un dispositif de manutention selon un deuxième mode de réalisation de l'invention, les deux supports étant en vis-à-vis ;
- la figure 19 est une représentation schématique montrant quatre vues partielles successives de l'un des montants du dispositif de manutention de la figure 18, ces vues rendant compte des étapes de la montée d'un chariot.

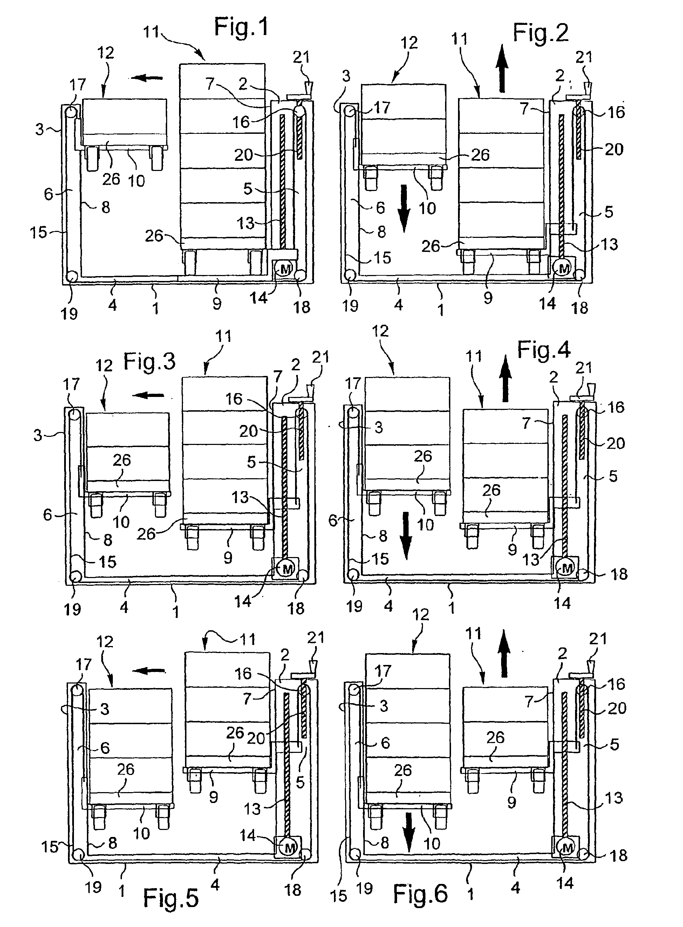

Le dispositif de manutention représenté aux figures 1 à 13 comporte une plateforme horizontale 1 rattachée à deux montants latéraux 2, 3 s'élevant verticalement.

La plateforme 1 est destinée à reposer sur le sol ou tout autre appui, éventuellement par l'intermédiaire de pieds (non représentés). Elle comporte une partie creuse entre les deux montants 2, 3 définissant une portion de chemin de guidage 4.

Les montants 2, 3 comportent également chacun une partie creuse définissant une portion de chemin de guidage 5, 6 en communication avec la portion de chemin de guidage 4 de la plateforme 1.

Un chemin de guidage 4, 5, 6 est formé par les trois portions définies ci-dessus.

Chacun des montants 2, 3 comporte une glissière 7, 8 sur laquelle est montée coulissant un support 9, 10 destiné à recevoir une pile de caisses 11, 12.

Les piles de caisses 11, 12 peuvent coopérer directement avec les supports 9, 10 ou bien, tel que représenté sur les figures, par l'intermédiaire d'un chariot à roulettes 26 plus commode pour déplacer les piles 11, 12.

Les supports 9, 10 peuvent être du type à fourche ou à surface plane et leurs dimensions sont avantageusement adaptées pour pouvoir s'insérer entre les roulettes des chariots 26.

De plus, les supports 9, 10 peuvent s'insérer dans des logements prévus dans la plateforme 1 de manière que, lorsqu'un support 9, 10 est complètement abaissé, il forme avec la plateforme 1 une surface plane (voir figure 1).

Pour des raisons de commodité de description, l'expression "première pile de caisses 11" désigne une pile de caisses pleines et, "deuxième pile de caisses 12" désigne une pile de caisses vides. De même, les expressions "premier montant latéral 2", "première glissière 7", "premier support 9" désignent les organes coopérant avec la première pile de caisses 11 et les expressions "deuxième montant latéral 3", "deuxième glissière 8", "deuxième support 10" désignent les organes coopérant avec la deuxième pile de caisses 12.

Les glissières 7, 8 et les supports 9, 10 sont disposés de manière à pouvoir soulever verticalement les piles de caisses 11, 12. Pour cela, le premier montant 2 comporte une vis 13 verticale disposée longitudinalement le long du montant 2 et reliée à une partie filetée du support 9.

Cette vis 13 est reliée, à l'une de ses extrémités, à un moteur 14 qui commande ainsi la montée et la descente du support 9 le long de la glissière 7.

Des moyens de liaison mécanique, destinés à synchroniser les mouvements des deux supports 9, 10 sont également prévus. Un câble 15 suit le chemin de guidage 4, 5, 6, défini par deux poulies supérieures 16, 17 et deux poulies inférieures 18, 19 et comporte une première extrémité reliée au premier support 9 et une deuxième extrémité reliée au deuxième support 10.

Le câble 15 suit le chemin suivant :
- il s'étend à partir du premier support 9 vers la partie supérieure du premier montant 2 ;
- après la poulie supérieure 16, il rejoint la base du premier montant 2;
- après la poulie inférieure 18, il traverse horizontalement la plateforme 1 ;
- ayant rejoint le deuxième montant 3, après la poulie inférieure 19, il s'étend tout le long du deuxième montant 3 ;
- après la poulie supérieure 17, il rejoint le deuxième support 10.

Lorsque le premier support 9 est soulevé (respectivement abaissé) d'une certaine hauteur sous l'action du moteur 14, le deuxième support 10 est par conséquent abaissé (respectivement soulevé) de la même hauteur.

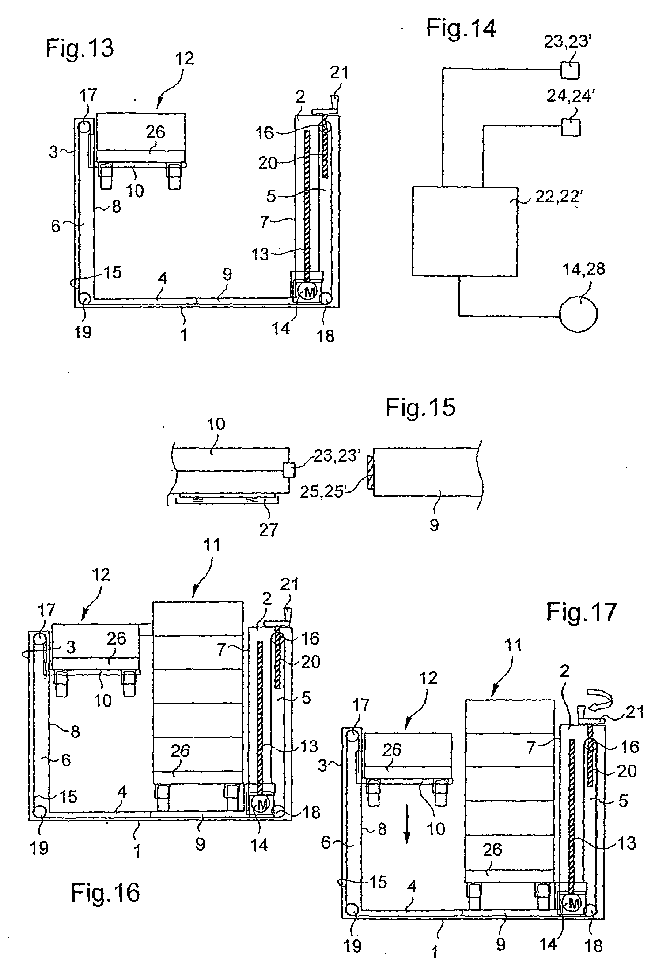

En référence aux figures 16 et 17, l'axe de la poulie supérieure 16 du premier montant 2 est monté sur un support entraîné verticalement par une vis de réglage 20. Cette vis 20 est actionnée par une manette 21 tournante qui permet d'effectuer à la main un réglage précis de la hauteur de la poulie 16, et donc de régler la longueur du chemin de guidage 4, 5, 6 pour définir la position relative des supports 9, 10.

Plus précisément, ce réglage permet d'adapter le dispositif de manutention à différentes hauteurs de caisses comme exposé plus loin.

Le dispositif de manutention comporte par ailleurs un circuit de commande schématisé à la figure 14.

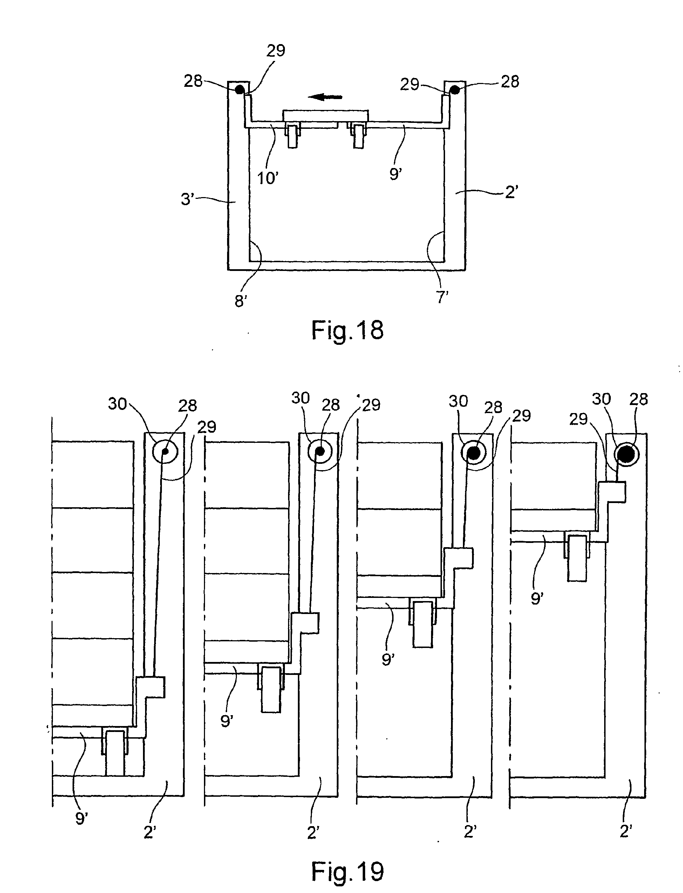

On notera que sur les figures 14 et 15, lorsque deux références numériques sont disposées côte à côte, celle qui est située à gauche de la virgule concerne le mode de réalisation illustré autrement sur les figures 1 à 17 tandis que la référence numérique située à droite de la virgule concerne le mode de réalisation illustré autrement sur les figures 18 et 19.

Un module de commande 22, tel qu'un automate programmable industriel, est relié en sortie au moteur 14 et reçoit en entrée les indications d'un capteur de support 23 et d'un capteur de caisse 24, qui peuvent être par exemple des capteurs optiques.

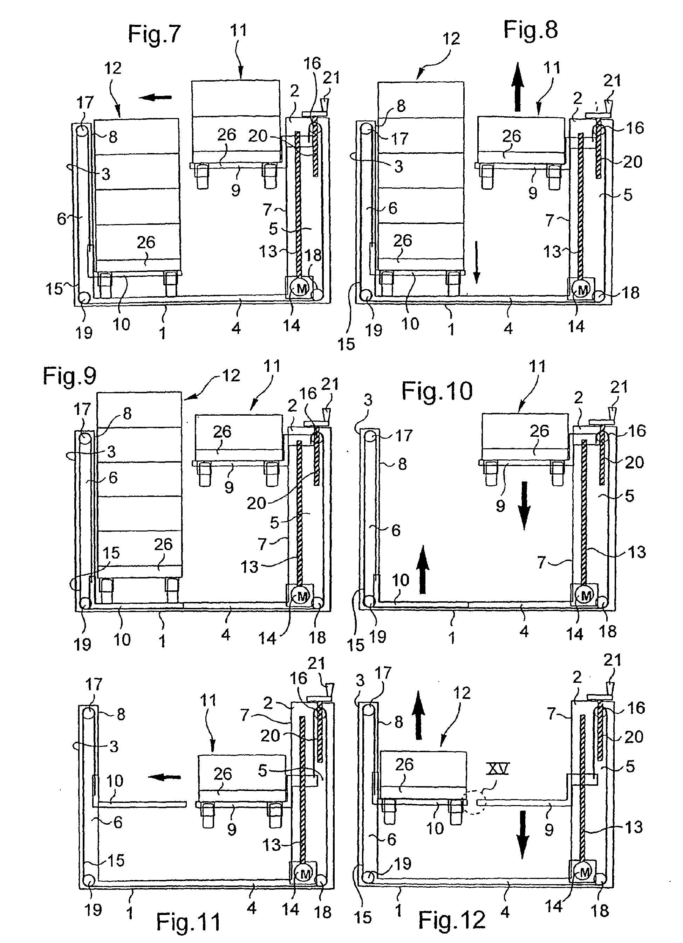

Le capteur de support 23 est destiné à fournir une indication sur l'alignement ou le non alignement des supports 9, 10 l'un en face de l'autre. Il peut être agencé conformément à la figure 15, qui est une vue de détail de la figure 12, le capteur 23 étant fixé à l'extrémité d'un support 3 tandis qu'un réflecteur 25 est fixé sur l'extrémité de l'autre support 2. L'alignement du capteur 23 et du réflecteur 25 peut être détecté par le module de commande 22.

Le capteur de caisse 24, quant à lui, est destiné à fournir une information sur la présence ou l'absence d'une caisse en regard de l'endroit où il est placé. Il peut être placé sur le premier montant 2 ou le deuxième montant 3.

Le dispositif de manutention dispose de plus d'un organe d'arrêt de sécurité 27 adapté à commander un interrupteur d'arrêt du moteur 14 (figure 15). Cet organe 27 est monté sous l'un au moins des supports 9, 10 de sorte que, lorsque le support 10 s'abaisse et rencontre un obstacle, ce dernier vient déclencher l'organe d'arrêt de sécurité 27 et arrêter le moteur 14.

Un cycle complet de fonctionnement du dispositif de manutention va maintenant être décrit.

Tout d'abord, le chemin de câble doit être réglé en fonction de la hauteur des caisses que l'on souhaite utiliser, conformément aux figures 16 et 17. Une première pile de caisses 11 est disposée sur le support 9 et une deuxième pile de caisses 12, ne comportant ici qu'une seule caisse, est disposée sur le deuxième support.

La manette 21 est alors actionnée, ce qui entraîne un mouvement du deuxième support 10, jusqu'à ce que les jointures entre deux caisses de chaque pile 11, 12 coïncident. Il s'agit ici, figure 17, de faire coïncider le haut de la caisse de la deuxième pile 12 avec la jointure entre les deux caisses du haut de la première pile de caisses 11, un dénivelé de quelques centimètres étant néanmoins acceptable.

En référence aux étapes illustrées aux figures 1 à 13, le cycle peut démarrer avec une caisse vide et son chariot 26 disposés sur le deuxième support 10 et avec une pile 11 de caisses pleines, également munie d'un chariot 26, disposée sur le premier support 9.

Le dispositif de manutention est positionné à proximité du poste de travail prévu pour consommer les pièces contenues dans les caisses.

Le poste de travail est agencé pour qu'il soit commode à un opérateur ou une machine de se servir en pièces dans un emplacement de référence occupé par la première caisse (celle du haut) de la première pile 11. Le dispositif de manutention est prévu pour assurer l'évacuation de ladite première caisse, une fois vidée de ses pièces, vers la deuxième pile 12 puis le positionnement de la caisse suivante de la première pile 11 à l'emplacement de référence.

En effet, une fois la première caisse de la première pile 11 vide, celle-ci est translatée, à la main ou à l'aide d'un actionneur, du sommet de la première pile 11 vers le sommet de la deuxième pile 12 (figure 1).

Une fois la translation effectuée, le capteur de caisse 24 détecte l'absence de caisse à l'emplacement de référence.

Le moteur 14 est alors commandé pour faire remonter la première pile 11 et ainsi placer la caisse qui est maintenant la première caisse de la première pile 11 à l'emplacement de référence (figure 2).

En référence à la figure 3, l'opérateur ou la machine dispose à nouveau d'une caisse pleine qui, une fois vidée, est de même translatée vers la deuxième pile 12.

La figure 4 montre à nouveau la remontée de la première caisse de la première pile 11 à l'emplacement de référence et la descente correspondante de la deuxième pile 12.

Les figures 5 et 6 montrent l'évacuation d'une caisse supplémentaire de la première pile de manière similaire aux figures 1 et 2 d'une part et aux figures 3 et 4 d'autre part.

Après que la nouvelle caisse pleine ait été mise en place suite à l'étape de la figure 6 puis vidée de ses pièces, l'étape de la figure 7 concerne la translation de cette caisse vers la deuxième pile 12 si bien qu'il ne reste plus qu'une seule caisse dans la première pile 11.

Le moteur 14 est alors commandé pour abaisser au maximum le deuxième support 10 et remonter la caisse de la première pile 11 de sorte que la deuxième pile 12 puisse être évacuée (figures 8 et 9).

La deuxième pile 10, ne comportant que des caisses vides, peut alors être évacuée aisément grâce au chariot à roulettes 26 par l'opérateur lui-même entre deux prises de pièces.

Une fois la dernière caisse de la première pile 11 vide, le moteur 14 est commandé, toujours par l'opérateur, pour abaisser le premier support 9 jusqu'à ce que les deux supports 9, 10 soient en vis-à-vis (figures 10 et 11). Lorsque le capteur de support 23 indique cette position des supports 9, 10, le moteur 14 est stoppé.

Notons que, pour l'opérateur ou la machine, le temps de prise de pièce et le temps d'évacuation des pièces s'entremêlent. L'opérateur ou la machine peut en effet procéder à des opérations de manutention entre deux prises de pièces et peut également prélever des pièces alors que les supports sont en mouvement.

Une fois la dernière caisse de la première pile 11 vide, elle est translatée, également par glissement, vers le deuxième support qui remonte ensuite au maximum sous l'effet de l'abaissement du premier support 9 commandé par l'opérateur ou la machine (figures 12 et 13).

Dans la position de la figure 13, le dispositif de manutention est prêt pour recevoir une nouvelle première pile 11 de caisses pleines, ce qui boucle le cycle en le ramenant à la configuration de la figure 1.

Dans une variante non illustrée, un capteur d'absence de la deuxième pile 12 est prévu pour déclencher automatiquement le passage à la position de mi-hauteur dans laquelle les supports 9, 10 sont en vis-à-vis.

Dans un autre mode de réalisation représenté aux figures 18 et 19, le chemin de guidage 4, 5, 6 ainsi que le câble 15 sont remplacés par un dispositif électronique de synchronisation commandant un moteur 28 associé à chacun des supports.

Sur les figures 18 et 19, les parties communes au mode de réalisation précédent sont identifiées par le même numéro suivi d'un prime.

En référence à la figure 18, le dispositif de manutention comporte un moteur 28 disposé au sommet de l'un des montants latéraux 2', 3'. Chaque moteur 28 coopère avec une sangle 29 rattachée au support 9', 10' correspondant de manière que le support 9', 10' pende au bout de la sangle 29, tout en étant guidé par les glissières 7' et 8'.

L'enroulement de la sangle 29 par le moteur 28 permet ainsi la montée du support 9', 10' correspondant tandis que son déroulement permet la descente du support 9', 10' par gravité.

La commande des moteurs 28 est assurée par un module de commande 22' représenté à la figure 14, ce module de commande 22' assurant la montée de l'un des supports 9' simultanément à la descente de l'autre support 10', et inversement, en fonction d'un organe de détection de hauteur de pile 24' situé sur chacun des montants latéraux 2', 3'.

Cette commande simultanée vise, de même que précédemment, à permettre le transfert de la caisse supérieure d'une pile directement vers l'autre pile par translation latérale, à niveau constant.

Le module de commande 22' est également relié à un deuxième organe de détection 23' adapté, selon la figure 15, à détecter la position de vis-à-vis des supports 9', 10' qui peut se faire, selon ce mode de réalisation, à n'importe quelle hauteur et de préférence le plus haut possible comme sur cette figure 18.

On notera que l'organe d'arrêt de sécurité 27 n'est pas prévu dans le mode de réalisation illustré autrement sur les figures 18 et 19.

La figure 19 montre les étapes successives de l'enroulement de la sangle 29 du premier montant latéral 2', le comportement au niveau du montant latéral 3' étant identique.

Le moteur 28 comporte ainsi un enrouleur 30 guidant la sangle 29 pendant son enroulement et permettant à la sangle 29 de s'enrouler sur elle-même de sorte qu'au fur et à mesure de l'enroulement, le diamètre du rotor motorisant cet enroulement augmente.

Le moteur 28 ne comporte ici pas de variateur dans la mesure où il est adapté à travailler à couple constant.

D'autres variantes de réalisation du dispositif de manutention peuvent être également envisagées sans pour autant sortir du cadre de l'invention. Notamment, des moyens autres que ceux décrits ci-dessus peuvent être employés pour assurer les différents mouvements relatifs des supports 9, 10. Le câble 15 peut par exemple être formé de tout type de lien souple, métallique ou non. De même, le dispositif de manutention peut coopérer avec d'autres types de contenants que des caisses, y compris des contenants pour fluide.

## Revendications

1. Dispositif de manutention de caisses et analogues, destiné à présenter itérativement la caisse supérieure d'une première pile (11) de caisses à une hauteur prédéterminée et à permettre l'évacuation de ladite caisse supérieure, de sorte que les caisses évacuées de la première pile (11) forment au fur et à mesure une deuxième pile (12), ce dispositif comportant :
- un premier support (9) mobile verticalement, destiné à recevoir ladite première pile (11) ;
- un deuxième support (10) mobile verticalement, destiné à recevoir ladite deuxième pile (12) ;
- des moyens pour commander de manière synchronisée le premier support (9) et le deuxième support (10) avec l'un d'eux qui monte lorsque l'autre descend, et inversement ;
lequel dispositif de manutention est **caractérisé en ce qu'**il comporte en outre un premier montant latéral (2) situé sur un premier côté latéral du dispositif et un deuxième montant latéral (3) distinct du premier montant (2) et situé sur un deuxième côté latéral du dispositif, opposé au premier côté latéral, chaque dit premier montant (2) et deuxième montant (3) étant muni d'une glissière (7, 8), le premier support (9) étant monté sur la glissière (7) du premier montant (2) et le deuxième support (10) étant monté sur la glissière (8) du deuxième montant (3), le dispositif étant agencé pour laisser libre l'espace existant entre le deuxième montant (3) et ladite caisse supérieure de la première pile (11), au niveau de la hauteur prédéterminée de sorte que la caisse supérieure de la première pile (11) soit transférable directement vers la deuxième pile (12) par translation latérale, c'est-à-dire orientée du premier coté latéral vers le deuxième côté latéral, et à niveau constant ou à peu près.

2. Dispositif de manutention selon la revendication 1, **caractérisé en ce que** les supports (9, 10) sont en outre adaptés à occuper une position de mi-hauteur dans laquelle ils sont disposés en vis-à-vis, au même niveau ou à peu près.

3. Dispositif de manutention selon l'une des revendications 1 et 2, **caractérisé en ce que** les moyens pour commander de manière synchronisée comportent un câble (15) dont chacune des extrémités est reliée à l'un respectif des supports (9, 10) et qui passe par un chemin de guidage (4, 5, 6) comportant deux poulies de renvoi inférieures (18, 19) disposées chacune à la base d'un respectif des montants latéraux (2, 3) et deux poulies de renvoi supérieures (16, 17) disposées chacune à l'extrémité supérieure d'un respectif des montants latéraux (2, 3), la portion du chemin de guidage (4) située entre les poulies de renvoi inférieures (18, 19) étant sensiblement horizontale et disposée sous lesdits supports (9, 10) de sorte que l'ensemble formé par les deux supports (9, 10) soit partiellement entouré par le chemin de guidage (4, 5, 6).

4. Dispositif de manutention selon l'une des revendications 1 à 3, **caractérisé en ce qu'**il comporte en outre au moins un moteur (14) coopérant avec des moyens de transmission (13) reliés aux moyens pour commander de manière synchronisée.

5. Dispositif de manutention selon la revendication 4, **caractérisé en ce que** lesdits moyens de transmission (13) relient le moteur (14) à l'un des supports (9, 10), de sorte que les déplacements dudit support (9) soient commandés directement par le moteur (14), les déplacements de l'autre support (10) étant commandés par l'intermédiaire des moyens pour commander de manière synchronisée.

6. Dispositif de manutention selon l'une des revendications 4 et 5, **caractérisé en ce que** lesdits moyens de transmission comportent une vis de transmission (13) adaptée à être entraînée en rotation par le moteur (14), le support (9) étant relié à un organe fileté en prise avec la vis de transmission (13).

7. Dispositif de manutention selon l'une des revendications 3 à 6, **caractérisé en ce qu'**au moins une des poulies de renvoi (16, 17, 18, 19) est montée sur un axe mobile permettant un déplacement de la poulie et une modification de la longueur du chemin de guidage (4, 5, 6).

8. Dispositif de manutention selon la revendication 7, **caractérisé en ce que** l'une des poulies de renvoi supérieures (16, 17) est montée mobile sensiblement verticalement par rapport au montant latéral (2, 3) correspondant.

9. Dispositif de manutention selon l'une des revendications 7 et 8, **caractérisé en ce que** l'une des poulies de renvoi supérieures (16, 17) est reliée à un organe fileté en prise avec une vis de réglage (20) montée tournante sur le montant latéral (2, 3) correspondant, la vis de réglage (20) étant reliée à des moyens d'entraînement (21) accessibles depuis ledit montant latéral (2, 3).

10. Dispositif de manutention selon l'une des revendications 1 à 9, **caractérisé en ce qu'**il comporte en outre un module de commande (22) des moyens pour commander de manière synchronisée ainsi qu'au moins un organe de détection (23, 24) relié audit module de commande (22), ce dernier étant adapté à commander les moyens pour commander de manière synchronisée en fonction des indications fournies par l'organe de détection (23, 24).

11. Dispositif de manutention selon la revendication 10, **caractérisé en ce qu'**il comporte un organe de détection (24) de la hauteur de la première pile (11).

12. Dispositif de manutention selon l'une des revendications 10 et 11, **caractérisé en ce qu'**il comporte un organe de détection (24) de la hauteur de la deuxième pile (12).

13. Dispositif de manutention selon l'une des revendications 10 à 12, **caractérisé en ce qu'**il comporte au moins un organe de détection de support (23) adapté à fournir une indication au module de commande (22) lorsque les deux supports (9, 10) sont en vis-à-vis.

14. Dispositif de manutention selon l'une des revendications 1 à 13, **caractérisé en ce qu'**il comporte un organe d'arrêt de sécurité (27) monté sous l'un au moins desdits supports (9, 10), cet organe (27) comportant des moyens d'arrêt des supports (9, 10).

15. Dispositif de manutention selon la revendication 1, **caractérisé en ce que** les moyens pour commander de manière synchronisée comportent deux moteurs (28) disposés chacun sur l'un des montants latéraux (2', 3').

16. Dispositif de manutention selon la revendication 15, **caractérisé en ce que** les supports (9', 10') sont en outre adaptés à occuper une position haute dans laquelle ils sont disposés en vis-à-vis, au même niveau ou à peu près.

17. Dispositif de manutention selon l'une des revendications 15 et 16, **caractérisé en ce que** chaque support (9', 10') est rattaché à la première extrémité d'un lien souple (29) dont la deuxième extrémité est rattachée au moteur (28) de sorte que l'enroulement de la deuxième extrémité du lien souple (29) par le moteur (28) provoque la montée du support (9', 10').

18. Dispositif de manutention selon la revendication 17, **caractérisé en ce que** le moteur (28) comporte un enrouleur (30) adapté à permettre l'enroulement sur elle-même de la deuxième extrémité du lien souple (29) par le moteur (28) de sorte qu'au cours de l'enroulement le diamètre d'enroulement augmente.

19. Dispositif de manutention selon la revendication 18, **caractérisé en ce que** le lien souple (29) comporte une sangle formant la deuxième extrémité du lien souple (29).

20. Dispositif de manutention selon l'une des revendications 15 à 19, **caractérisé en ce qu'**il comporte en outre un module de commande (22') des moyens pour commander de manière synchronisée, ainsi qu'au moins un organe de détection (23', 24') relié audit module de commande (22'), ce dernier étant adapté à commander les moyens pour commander de manière synchronisée en fonction des indications fournies par l'organe de détection (23', 24').

21. Dispositif de manutention selon la revendication 20, **caractérisé en ce qu'**il comporte deux organes de détection (24') disposés chacun sur l'un des montants latéraux (2', 3') et adaptés chacun à la détection de la hauteur de la pile correspondante.

## Claims

1. Handling device for boxes and the like for repeatedly presenting the top box of a first stack (11) of boxes at a predetermined height and making it possible to remove said top box in such a way that the boxes removed from the first stack (11) gradually form a second stack (12), this device comprising:
- a first vertically movable support (9) for receiving said first stack (11);
- a second vertically movable support (10) for receiving said second stack (12);
- means for synchronously driving the first and second supports (9, 10) so that when one goes up the other goes down and vice versa;
which handling device is **characterised in that** it further includes a first lateral upright (2) positioned on a first side of the device and a second lateral upright (3) separate from the first upright (2) and positioned on a second side of the device, opposite the first side, each of said first upright (2) and second upright (3) being provided with a slideway (7, 8), the first support (9) being mounted on the slideway (7) of the first upright (2) and the second support (10) being mounted on the slideway (8) of the second upright (3), the device being adapted to leave free the gap between the second upright (3) and said top box of the first stack (11) at the predetermined height so that the top box of the first stack (11) is transferable directly to the second stack (12) by lateral displacement, i.e. oriented from the first side to the second side, at a more or less permanent level.

2. Handling device according to claim 1, **characterised in that** the supports (9, 10) are further adapted to occupy a mid-height position in which they are disposed face-to-face at more or less the same level.

3. Handling device according to either claim 1 or claim 2, **characterised in that** the synchronised drive means include a cable (15) each of the ends whereof is connected to a respective one of the supports (9, 10) and which travels along a guide path (4, 5, 6) including two bottom idler pulleys (18, 19) each disposed at the base of a respective one of the lateral uprights (2, 3) and two top idler pulleys (16, 17) each disposed at the top of a respective one of the lateral uprights (2, 3), the portion (4) of the guide path situated between the bottom idler pulleys (18, 19) being substantially horizontal and disposed under said supports (9, 10) so that the assembly formed by the two supports (9, 10) is partially surrounded by the guide path (4, 5, 6).

4. Handling device according to any one of claims 1 to 3, **characterised in that** it further includes at least one motor (14) co-operating with transmission means (13) connected to the synchronised drive means.

5. Handling device according to claim 4, **characterised in that** said transmission means (13) connect the motor (14) to one of the supports (9, 10) so that the movement of said support (9) are driven directly by the motor (14), the movement of the other support (10) being driven by the synchronised drive means.

6. Handling device according to either claim 4 or claim 5, **characterised in that** said transmission means include a transmission screw (13) adapted to be driven in rotation by the motor (14), the support (9) being connected to a threaded member meshing with the transmission screw (13).

7. Handling device according to any one of claims 3 to 6, **characterised in that** at least one of the idler pulleys (16, 17, 18, 19) is mounted on a mobile shaft allowing movement of the pulley and modification of the length of the guide path (4, 5, 6).

8. Handling device according to claim 7, **characterised in that** one of the top idler pulleys (16, 17) is mounted so as to be mobile substantially vertically relative to the corresponding lateral upright (2, 3).

9. Handling device according to either claim 7 or claim 8, **characterised in that** one of the top idler pulleys (16, 17) is connected to a threaded member meshing with an adjuster screw (20) rotatably mounted on the corresponding lateral upright (2, 3), the adjuster screw (20) being connected to drive means (21) accessible from said lateral upright (2, 3).

10. Handling device according to any one of claims 1 to 9, **characterised in that** it further includes a control module (22) for the synchronised drive means and at least one sensing member (23, 24) connected to said control module (22), which is adapted to control the synchronised drive means as a function of indications supplied by the sensing member (23, 24).

11. Handling device according to claim 10, **characterised in that** it includes a member (24) for sensing the height of the first stack (11).

12. Handling device according to either claim 10 or claim 11, **characterised in that** it includes a member (24) for sensing the height of the second stack (12).

13. Handling device according to any one of claims 10 to 12, **characterised in that** it includes at least one support sensing member (23) adapted to supply an indication to the control module (22) when the two supports (9, 10) are face-to-face.

14. Handling device according to any one of claims 1 to 13, **characterised in that** it includes a safety stop member (27) mounted under at least one of said supports (9, 10) and including stop means for the supports (9, 10).

15. Handling device according to claim 1, **characterised in that** the synchronised drive means include two motors (28) each disposed on one of the lateral uprights (2', 3').

16. Handling device according to claim 15, **characterised in that** the supports (9', 10') are further adapted to occupy a high position in which they are disposed face-to-face at more or less the same level.

17. Handling device according to either claim 15 or claim 16, **characterised in that** each support (9', 10') is attached to the first end of a flexible connection (29) whose second end is attached to the motor (28) so that winding in of the second end of the flexible connection (29) by the motor (28) raises the support (9', 10').

18. Handling device according to claim 17, **characterised in that** the motor (28) includes a winder (30) adapted to enable the second end of the flexible connection (29) to be wound up on itself by the motor (28) so that during winding the winding diameter increases.

19. Handling device according to claim 18, **characterised in that** the flexible connection (29) includes a strap forming the second end of the flexible connection (29).

20. Handling device according to any one of claims 15 to 19, **characterised in that** it further includes a control module (22') of the synchronised drive means and at least one sensing member (23', 24') connected to said control module (22'), which controls the synchronised drive means as a function of the indications supplied by the sensing member (23', 24').

21. Handling device according to claim 20, **characterised in that** it includes two sensing members (24') each disposed on one of the lateral uprights (2', 3') and each adapted to sense the height of the corresponding stack.

## Patentansprüche

1. Vorrichtung zur Handhabung von Kästen und dergleichen, die dazu bestimmt ist, den obersten Kasten eines ersten Kastenstapels (11) auf eine vorgegebene Höhe zu bringen und das Entleeren dieses oberen Kastens zu ermöglichen, derart, dass die entleerten Kästen des ersten Stapels (11) einen entsprechenden zweiten Stapel (12) bilden, wobei diese Vorrichtung umfasst:
- einen ersten Träger (9), der vertikal beweglich ist und dazu bestimmt ist, den ersten Stapel (11) aufzunehmen;
- einen zweiten Träger (10), der vertikal beweglich ist und dazu bestimmt ist, den zweiten Stapel (12) aufzunehmen;
- Mittel zum synchronisierten Steuern des ersten Trägers (9) und des zweiten Trägers (10) in der Weise, dass einer von ihnen ansteigt, während der andere absinkt, und umgekehrt;
wobei die Handhabungsvorrichtung **dadurch gekennzeichnet ist, dass** sie außerdem eine erste seitliche Stütze (2), die sich auf einer ersten Seite der Vorrichtung befindet, und eine zweite seitliche Stütze (3), die von der ersten Stütze (2) verschieden ist und sich auf einer zweiten Seite der Vorrichtung gegenüber der ersten Seite befindet, umfasst, wobei die erste Stütze (2) und die zweite Stütze (3) jeweils mit einer Gleitführung (7, 8) versehen sind, wobei der erste Träger (9) an der Gleitführung (7) der ersten Stütze (2) montiert ist und der zweite Träger (10) an der Gleitführung (8) der zweiten Stütze (3) montiert ist, wobei die Vorrichtung dazu ausgelegt ist, den Zwischenraum, der zwischen der zweiten Stütze (3) und dem oberen Kasten des ersten Stapels (11) vorhanden ist, auf der vorgegebenen Höhe freizulassen, derart, dass der obere Kasten des ersten Stapels (11) durch seitliche Translation, d. h. in einer Orientierung von der ersten Seite zu der zweiten Seite, und auf konstanter oder fast konstanter Höhe direkt zu dem zweiten Stapel (11) umgeladen werden kann.

2. Handhabungsvorrichtung nach Anspruch 1, **dadurch gekennzeichnet, dass** die Träger (9, 10) außerdem dazu ausgelegt sind, eine Position auf mittlerer Höhe einzunehmen, in der sie auf gleicher oder fast gleicher Höhe einander gegenüber angeordnet sind.

3. Handhabungsvorrichtung nach einem der Ansprüche 1 und 2, **dadurch gekennzeichnet, dass** die Mittel zum synchronisierten Steuern ein Seil (15) umfassen, wovon jedes Ende mit einem entsprechenden Träger (9, 10) verbunden ist und auf einem Führungsweg (4, 5, 6) verläuft, der zwei untere Umlenkscheiben (18, 19), die jeweils an der Basis einer entsprechenden seitlichen Stütze (2, 3) angeordnet sind, und zwei obere Umlenkscheiben (16, 17), die jeweils am oberen Ende einer entsprechenden seitlichen Stütze (2, 3) angeordnet sind, umfasst, wobei der Abschnitt des Führungswegs (4), der sich zwischen den unteren Umlenkscheiben (18, 19) befindet, im Wesentlichen horizontal ist und sich unter den Trägern (9, 10) befindet, derart, dass die durch die zwei Träger (9, 10) gebildete Gesamtheit von dem Führungsweg (4, 5, 6) teilweise umgeben ist.

4. Handhabungsvorrichtung nach einem der Ansprüche 1 bis 3, **dadurch gekennzeichnet, dass** sie außerdem wenigstens einen Motor (14) umfasst, der mit Getriebemitteln (13) zusammenwirkt, die mit den Mitteln zum synchronisierten Steuern verbunden sind.

5. Handhabungsvorrichtung nach Anspruch 4, **dadurch gekennzeichnet, dass** die Getriebemittel (13) den Motor (14) mit einem der Träger (9, 10) verbinden, derart, dass die Verlagerungen des Trägers (9) direkt durch den Motor (14) gesteuert werden, wobei die Verlagerungen des anderen Trägers (10) über Mittel zum synchronisierten Steuern gesteuert werden.

6. Handhabungsvorrichtung nach einem der Ansprüche 4 und 5, **dadurch gekennzeichnet, dass** die Getriebemittel eine Getriebeschraube (13) umfassen, die dazu ausgelegt ist, durch den Motor (14) rotatorisch angetrieben zu werden, wobei die Stütze (9) mit einem Gewindeorgan verbunden ist, das mit der Getriebeschraube (13) in Eingriff ist.

7. Handhabungsvorrichtung nach einem der Ansprüche 3 bis 6, **dadurch gekennzeichnet, dass** wenigstens eine der Umlenkscheiben (16, 17, 18, 19) an einer beweglichen Achse angebracht ist, was eine Verlagerung der Riemenscheibe und eine Veränderung der Länge des Führungswegs (4, 5, 6) ermöglicht.

8. Handhabungsvorrichtung nach Anspruch 7, **dadurch gekennzeichnet, dass** eine der oberen Umlenkscheiben (16, 17) im Wesentlichen vertikal in Bezug auf die entsprechende seitliche Stütze (2, 3) beweglich angebracht ist.

9. Handhabungsvorrichtung nach einem der Ansprüche 7 und 8, **dadurch gekennzeichnet, dass** eine der oberen Umlenkscheiben (16, 17) mit einem Gewindeorgan verbunden ist, das mit einer Einstellschraube (20) in Eingriff ist, die an der entsprechenden seitlichen Stütze (2, 3) drehbar angebracht ist, wobei die Einstellschraube (20) mit Antriebsmitteln (21) verbunden ist, die von der seitlichen Stütze (2, 3) aus zugänglich sind.

10. Handhabungsvorrichtung nach einem der Ansprüche 1 bis 9, **dadurch gekennzeichnet, dass** sie außerdem ein Steuermodul (22) für die Mittel zum synchronisierten Steuern sowie wenigstens ein Erfassungsorgan (23, 24), das mit dem Steuermodul (22) verbunden ist, umfasst, wobei dieses Letztere dazu ausgelegt ist, die Mittel zum synchronisierten Steuern in Abhängigkeit von Angaben, die von dem Erfassungsorgan (23, 24) geliefert werden, zu steuern.

11. Handhabungsvorrichtung nach Anspruch 10, **dadurch gekennzeichnet, dass** sie ein Erfassungsorgan (24) für die Höhe des ersten Stapels (11) umfasst.

12. Handhabungsvorrichtung nach einem der Ansprüche 10 und 11, **dadurch gekennzeichnet, dass** sie ein Erfassungsorgan (24) für die Höhe des zweiten Stapels (12) umfasst.

13. Handhabungsvorrichtung nach einem der Ansprüche 10 bis 12, **dadurch gekennzeichnet, dass** sie wenigstens ein Träger-Erfassungsorgan (23) umfasst, das dazu ausgelegt ist, an das Steuermodul (22) eine Angabe zu liefern, wenn sich die zwei Träger (9, 10) einander gegenüber befinden.

14. Handhabungsvorrichtung nach einem der Ansprüche 1 bis 13, **dadurch gekennzeichnet, dass** sie ein Sicherheitshalteorgan (27) umfasst, das unter wenigstens einem der Träger (9, 10) angebracht ist, wobei dieses Organ (27) Mittel zum Anhalten der Träger (9, 10) enthält.

15. Handhabungsvorrichtung nach Anspruch 1, **dadurch gekennzeichnet, dass** die Mittel zum synchronisierten Steuern zwei Motoren (28) enthalten, die jeweils an einer der seitlichen Stützen (2', 3') angeordnet sind.

16. Handhabungsvorrichtung nach Anspruch 15, **dadurch gekennzeichnet, dass** die Träger (9', 10') außerdem dazu ausgelegt sind, eine obere Position einzunehmen, in der sie auf gleicher oder fast gleicher Höhe einander gegenüber angeordnet sind.

17. Handhabungsvorrichtung nach einem der Ansprüche 15 und 16, **dadurch gekennzeichnet, dass** jeder Träger (9', 10') an das erste Ende eines elastischen Bandes (29) angefügt ist, dessen zweites Ende an den Motor (28) angefügt ist, derart, dass das Aufwickeln des zweiten Endes des elastischen Bandes (29) durch den Motor (28) das Anheben des Trägers (9', 10') bewirkt.

18. Handhabungsvorrichtung nach Anspruch 17, **dadurch gekennzeichnet, dass** der Motor (28) eine Aufwickeleinrichtung (30) umfasst, die dazu ausgelegt ist, ein Aufwickeln des zweiten Endes des elastischen Bandes (29) durch den Motor (28) auf sich zu ermöglichen, derart, dass während des Aufwickelns der Wickeldurchmesser zunimmt.

19. Handhabungsvorrichtung nach Anspruch 18, **dadurch gekennzeichnet, dass** das elastische Band (29) einen Riemen umfasst, der das zweite Ende des elastischen Bandes (29) bildet.

20. Handhabungsvorrichtung nach einem der Ansprüche 15 bis 19, **dadurch gekennzeichnet, dass** sie außerdem ein Steuermodul (22') für die Mittel zum synchronisierten Steuern sowie wenigstens ein Erfassungsorgan (23', 24'), das mit dem Steuermodul (22') verbunden ist, umfasst, wobei dieses Letztere dazu ausgelegt ist, die Mittel zum synchronisierten Steuern in Abhängigkeit von Angaben, die von dem Erfassungsorgan (23', 24') geliefert werden, zu steuern.

21. Handhabungsvorrichtung nach Anspruch 20, **dadurch gekennzeichnet, dass** sie zwei Erfassungsorgane (24') umfasst, die jeweils an einer der seitlichen Stützen (2', 3') angeordnet sind und jeweils dazu ausgelegt sind, die Höhe des entsprechenden Stapels zu erfassen.
